# EUROPÄISCHE PATENTANMELDUNG

(11) **EP 1 538 085 A1**
(43) Veröffentlichungstag der Anmeldung: **08.06.2005**
(21) Anmeldenummer: 04028517.3
(22) Anmeldetag: 02.12.2004
(51) Int. Cl.: B65B 61/02, B65B 9/20, B65B 51/30

(54) **Vorrichtung zum Herstellen einer aus mindestens zwei Beuteln bestehender Beutelkette**

(30) Priorität: 03.12.2003 DE 10356457
(71) Anmelder: Rovema Verpackungsmaschinen GmbH, 35463 Fernwald (DE)
(72) Erfinder: Braun, Harald, 35305 Grünberg (DE); Baur, Walter Dr, 63584 Gründau (DE)

(57) **Zusammenfassung**

Die Anmeldung betrifft eine Vorrichtung (47) zum Verschweißen einer umgeformten Folienbahn (2), um eine aus mindestens zwei Beuteln (15, 16) bestehende Beutelkette (17) herzustellen, wobei zwischen jeweils zwei Beuteln (15, 16) der Beutelkette (17) eine Perforation (18) vorgesehen wird, um diese Beutel (15, 16) manuell voneinander trennen zu können, bestehend aus einer Folienbahn (2) und zwei gegeneinander beweglichen, die Folienbahn (2) zwischen sich einklemmenden Backen (10, 11), wobei die erste Backe (11) ein Stechmesser (20) aufweist, um die Folienbahn (2) bei einer größeren Auslenkung des Stechmessers (20) vollständig durchtrennen zu können, und bei einer geringeren Auslenkung lediglich in die Folienbahn (2) einzustechen, um eine Perforation (18) zu erzeugen.

Um die Vorrichtung (47) mit einem zahnlosen Stechmesser (20) betreiben zu können, wird vorgeschlagen, dass die Schneide (21) gerade ausgebildet ist, dass die zweite Backe (10) einen die Auslenkung des Stechmessers (20) begrenzenden Amboss (22) aufweist, dass am Amboss (22) eine Reihe von Erhebungen (26) vorgesehen ist, wobei jeweils eine Erhebung (26) einen mechanischen Widerstand für die Schneide (21) darstellt, dass zwischen jeweils zwei Erhebungen (26) eine Materialaussparung (27) vorgesehen ist, und dass eine Stelleinrichtung (29) dazu vorgesehen ist, den Amboss (22) zu versetzen, um die Schneide (21) wahlweise gegen die Erhebungen (26) zu setzen um eine Perforation (18) zu erzeugen, bei versetztem Amboss (22), die Schneide (21) nicht gegen die Erhebungen (26) setzen zu können, um die Folienbahn (2) zu durchtrennen.

## Beschreibung

Gegenstand der Anmeldung ist eine Vorrichtung zum Verschweißen einer umgeformten Folienbahn, um eine aus mindestens zwei Beuteln bestehende Beutelkette herzustellen, wobei zwischen jeweils zwei Beuteln der Beutelkette eine Perforation vorgesehen wird, um diese Beutel später manuell voneinander trennen zu können.

Derartige Beutelketten sind hinlänglich bekannt. Am häufigsten werden Beutelketten aus zwei miteinander verbundenen Beuteln hergestellt. Dabei können die beiden Beutel ein gleiches oder ein unterschiedliches Produkt enthalten. In selteneren Fällen werden Beutelketten aus drei oder mehr zusammenhängenden Beuteln vertrieben. Ein Verbraucher kann einen Beutel entlang der Perforation von der Beutelkette abreißen, um nachfolgend die im Beutel enthaltene Produktportion zu verwenden.

Es sind vertikale Schlauchbeutelmaschinen bekannt, mit denen Beutelketten hergestellt werden können. Bei einem derartigen Maschinentyp wird eine Folienbahn von einer Vorratsrolle abgezogen und zu einem vertikal ausgerichteten Folienschlauch umgeformt. Der Folienschlauch wird befüllt, sowie längs und quer verschweißt. An seiner Quersiegeleinrichtung sind zwei gegeneinander bewegliche, die umgeformte Folienbahn zwischen sich einklemmende Backen vorgesehen, wobei die erste Backe ein mit Zähnen versehenes Stechmesser aufweist, um die Folienbahn bei einer größeren Auslenkung des Stechmessers vollständig durchtrennen zu können, und bei einer geringeren Auslenkung lediglich mit den Spitzen der Zähne in die Folienbahn einstechen zu können, um eine Perforation zu erzeugen. Die zweite Backe weist einen genügend tiefen Schlitz auf, in welchen das Stechmesser eindringt. Durch eine abwechselnd geringere oder größere Auslenkung werden aus zwei befüllten Beuteln bestehende Beutelketten hergestellt.

Die bekannte Vorrichtung hat den Nachteil, dass das Stechmesser Zähne aufweisen muss. Ein derartiges Stechmesser ist relativ aufwändig in seiner Herstellung und daher relativ teuer.

Es liegt die Aufgabe zu Grunde, eine Vorrichtung gemäß dem Oberbegriff des Anspruchs 1 so weiterzubilden, dass ein Stechmesser, welches eine gerade Schneide aufweist, eingesetzt werden kann.

Gelöst ist die Aufgabe gemäß dem kennzeichnenden Teil des Anspruchs 1. Danach ist die Schneide gerade ausgebildet, weist die zweite Backe einen die Auslenkung des Stechmessers begrenzenden Amboss auf, ist am Amboss eine Reihe von Erhebungen vorgesehen, wobei jeweils eine Erhebung einen mechanischen Widerstand für die Schneide darstellt, ist zwischen jeweils zwei Erhebungen eine Materialaussparung vorgesehen, und eine Stelleinrichtung ist dazu vorgesehen, den Amboss zu versetzen, um die Schneide wahlweise gegen die Erhebungen zu setzen oder, bei versetztem Amboss, die Schneide nicht gegen die Erhebungen setzen zu können.

Die vorgeschlagene Vorrichtung hat den Vorteil, dass ein Stechmesser mit einer geraden Schneide dazu genutzt werden kann, sowohl eine Perforation als auch eine Durchtrennung des Folienschlauches auszuführen. Schlägt die Schneide gegen die Erhebungen des Ambosses, so wird an jeder Erhebung ein Trennabschnitt einer Perforation erzeugt. Bei der Herstellung von aus zwei Beuteln bestehenden Beutelkette wird der Amboss abwechselnd in eine ihn nutzende und eine ihn nicht nutzende Position gesetzt. Sein Positionieren oder Ausrichten kann durch eine einfache, an der zweiten Backe befestigte, mit der zweiten Backe mitbewegte Stelleinrichtung geschehen. Oder ein mechanisches Koppelglied überträgt die Hin- und Herbewegung der zweiten Backe auf einen Positionsumschalter für den Amboss. Schlägt das Stechmesser gegen den Amboss, wird es also nicht so weit ausgelenkt, so erfolgt lediglich eine Perforation der Beutelkette. Schlägt das Stechmesser dagegen nicht auf die Erhebungen, kommt es also zu einer größeren Messerauslenkung, oder schlägt das Messer gegen eine gerade Ambosskante, so erfolgt eine Abtrennung der Beutelkette vom Folienschlauch. Die Stellungen des Ambosses beziehen sich jeweils auf eine Sollauslenkung bei geschlossenen Backen, wenn eine Querverschweißung der Beutelkette erfolgt. Während bei einer Querverschweißung die äußeren Nähte zweier aufeinanderfolgender Beutelketten erzeugt werden, werden bei einer nachfolgenden Querverschweißung zwei Schweißnähte mit dazwischen angeordneter Perforation erzeugt, wobei diese beiden Schweißnähte zwischen den Beuteln der Beutelkette liegen.

Weitere, vorteilhafte Ausgestaltungen der vorgeschlagenen Vorrichtung sind in den Ansprüchen 2 und 3 beschrieben.

Eine wahlweise Durchtrennung oder Perforation des Folienschlauches wird erreicht, wenn die Stelleinrichtung dazu vorgesehen ist, den Amboss in die zweite Backe hinein und in entgegengesetzte Richtung dazu wieder herauszustellen (Anspruch 2). Bei herausgestelltem Amboss schlägt die Schneide gegen den Amboss und bei hineingestelltem Amboss fährt das Messer hinter dem Folienschlauch ins Leere, d. h. es kommt zu einer vollständigen Durchtrennung des Folienschlauches.

Ist gemäß Anspruch 3 der Amboss um eine Achse drehbar in der zweiten Backe befestigt, hat der Amboss eine zylinderartige Form, wobei sein Mantel eine Anstoßfläche mit den Erhebungen zum Anstoßen der Schneide des Stechmessers aufweist, und grenzt an die Anstoßfläche ein Freiraum an, so dass bei einer Drehung des Ambosses wahlweise die Anstoßfläche oder der Freiraum in die Bewegungsrichtung des Stechmessers gesetzt werden kann, so kann durch eine Drehung des Ambosses in eine bestimmte Ausrichtung wahlweise eine Perforation oder eine Durchtrennung des Folienschlauches durchgeführt werden.

Je nachdem, ob eine unterbrochene Anstoßfläche im Auslenkungsbereich des Stechmessers im Mantel vorgesehen ist, kommt es zu lediglich einer Perforation oder zu einer Durchtrennung der Folienbahn. Im Falle der Herstellung einer aus drei Beuteln bestehenden Beutelkette müsste der Amboss stets zweimal eine höher (radial weiter außen) gelegene Anstoßfläche darbieten, um zwei Perforationen zu erzeugen und nachfolgend um einen bestimmten Winkel gedreht werden, um einen Freiraum dem Stechmesser darzubieten, so dass eine Abtrennung der Beutelkette vom Folienschlauch erfolgt.

Im folgenden wird die Erfindung an Hand von Ausführungsbeispiele darstellenden Figuren näher beschrieben. Es zeigt:
- Figur 1: in einer Seitenansicht eine vertikale Schlauchbeutelmaschine bei der Herstellung von jeweils zwei Beuteln aufweisenden Beutelketten, an deren Quersiegeleinrichtung zwei gegeneinander bewegliche, einen Folienschlauch quer zu dessen Transportrichtung verschweißende Backen mit Stechmesser dazu vorgesehen sind, abwechselnd mit dem in der ersten Backe befindlichen Stechmesser mit gerader Schneide eine Perforation und eine Durchtrennung des Folienschlauches auszuführen und die zweite Backe einen als Widerstand für das Stechmesser wirkenden, unterbrochenem Amboss aufweist;
- Figur 2: in einer Ansicht von vorne die Schweißfläche der zweiten Backe der Figur 1 mit dem Amboss, wobei der Amboss eine Reihe von Erhebungen aufweist, zwischen jeweils zwei Erhebungen eine Materialaussparung vorgesehen ist, und der Amboss mittels einer (nicht erkennbaren) Stelleinrichtung nach jedem Schweißvorgang zuerst um eine kleine Strecke in die Backe hinein versetzt und dann wieder zurück gesetzt wird;
- Figur 3: in einem teilweisen Schnitt und in vergrößerter Darstellung die den Folienschlauch verschweißenden Backen der Figur 1;
- Figur 4: in einer Ansicht von oben das Stechmesser und den Amboss aus den Backen der Figur 3 unmittelbar vor dem Erzeugen einer Perforation;
- Figur 5: in einer Ansicht von oben den Gegenstand der Figur 4, jedoch direkt nach einem Durchstoßen des Folienschlauches und somit erzeugter Perforation, wobei die Schneide des Stechmessers auf den Erhebungen des Ambosses anstößt;
- Figur 6: in einer Ansicht von oben den Gegenstand der Figur 5, jedoch mit nach hinten versetztem Amboss, so dass die Schneide nicht auf den Amboss stößt, und das Stechmesser weiter ausgelenkt wurde, um den Folienschlauch vollständig zu durchtrennen;
- Figur 7: in einer Seitenansicht und in vergrößerter Darstellung die fertiggestellte Beutelkette aus Figur 1, mit einer Perforation in einer die beiden Beutel voneinander abgrenzenden Quernaht;
- Figur 8: in einem Querschnitt eine Backe mit einem leicht verändertem, in Bewegungsrichtung des Stechmessers verstellbarem Amboss;
- Figur 9: in einem Querschnitt eine Backe mit einem um eine Achse drehbaren Amboss, wobei der Amboss eine zylinderartige Form hat und drei unterschiedlich tief liegende Flächen an seinem Mantel aufweist, von denen eine Fläche die Erhebungen aufweist, sowie
- Figur 10: in einer Seitenansicht eine aus drei Beuteln bestehende Beutelkette.

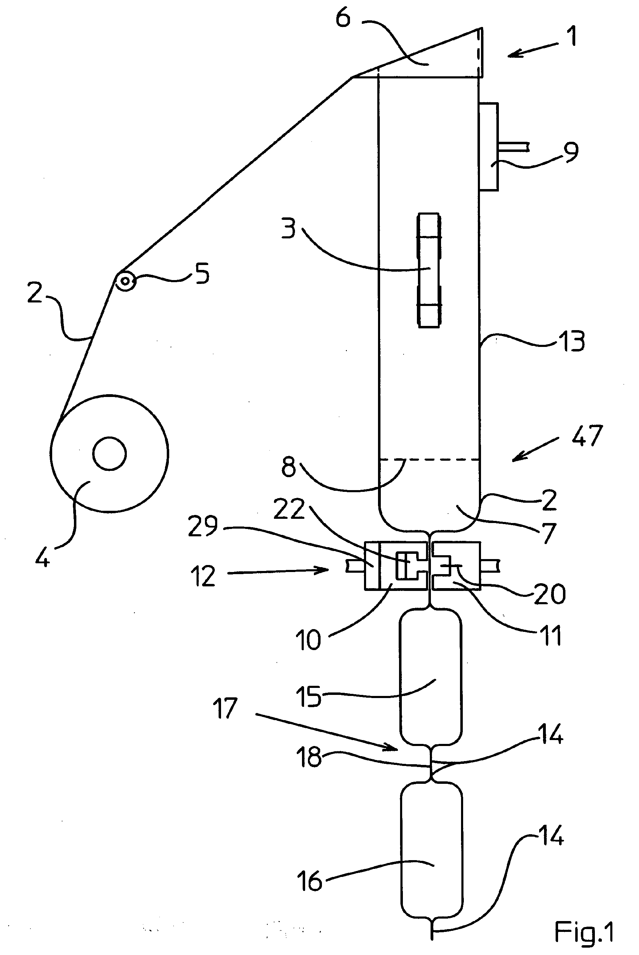

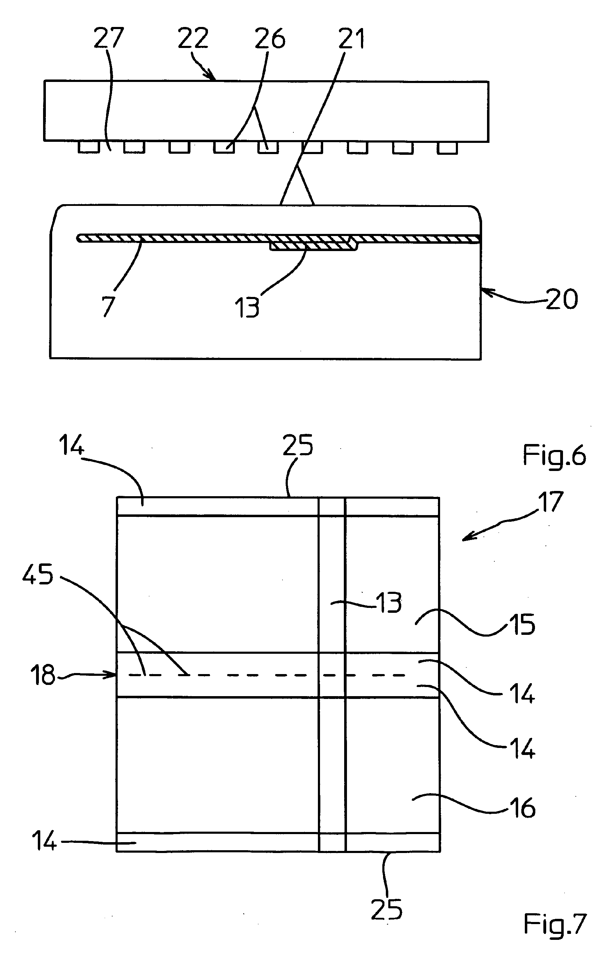

Bei einer vertikalen Schlauchbeutelmaschine 1 wird eine Folienbahn 2 mittels eines Folienabzuges 3 von einer Vorratsrolle 4 abgezogen und über eine Umlenkrolle 5 einer Formschulter 6 zugeführt (Figur 1). An der Formschulter 6 wird die Folienbahn 2 zu einem Folienschlauch 7 umgeformt. Der Folienschlauch 7 läuft über ein Formatrohr 8, durch welches eine Befüllung des unteren Endes des Folienschlauches 7 erfolgt. Der Folienschlauch 7 wird mittels einer Längssiegeleinrichtung 9 längs und mittels einer zwei Backen 10, 11 aufweisenden Quersiegeleinrichtung 12 quer verschweißt. Dabei entstehen eine Längsnaht 13 und Quernähte 14 am Folienschlauch 7 und den Beuteln 15, 16 einer erzeugten Beutelkette 17 (Figur 7).

Eine Vorrichtung 47 dient zum Verschweißen der umgeformten Folienbahn 2, um die aus den zwei Beuteln 15, 16 bestehende Beutelkette 17 herzustellen. Zwischen jeweils zwei Beuteln 15, 16 der Beutelkette 17 ist eine Perforation 18 vorgesehen, um diese Beutel 15, 16 manuell voneinander trennen zu können. Die Vorrichtung 47 besteht aus der Folienbahn 2 und zwei gegeneinander beweglichen, die Folienbahn 2 zwischen sich einklemmenden Backen 10, 11, wobei die erste Backe 11 ein mit einer Schneide 21 versehendes Stechmesser 20 aufweist, um die Folienbahn 2 bei einer größeren Auslenkung des Stechmessers 20 vollständig durchtrennen zu können, und bei einer geringeren Auslenkung lediglich in die Folienbahn 2 einstechen zu können, um die Perforation 18 zu erzeugen.

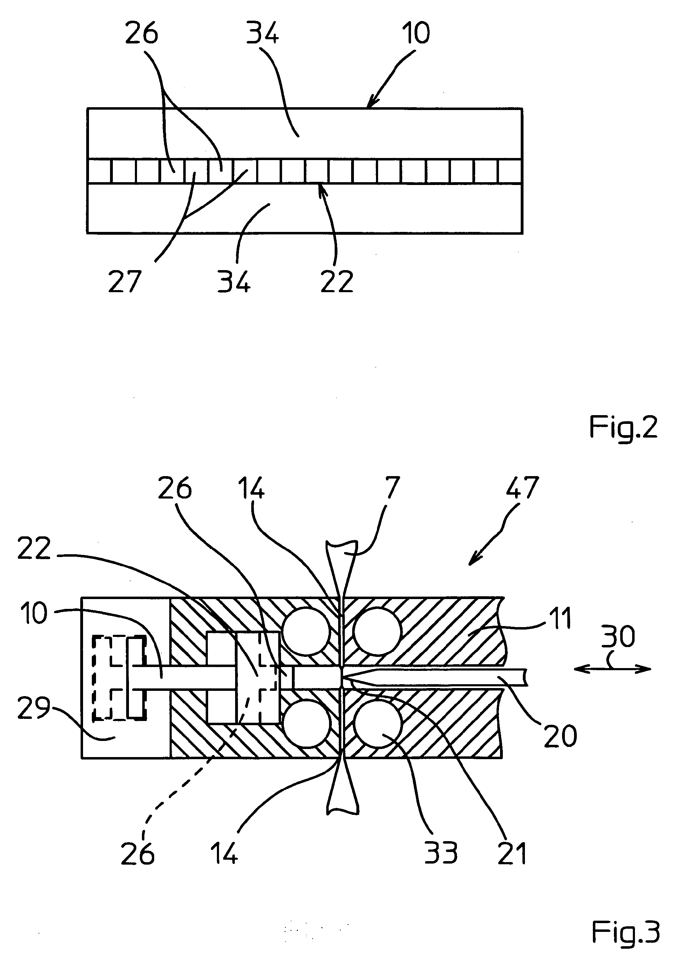

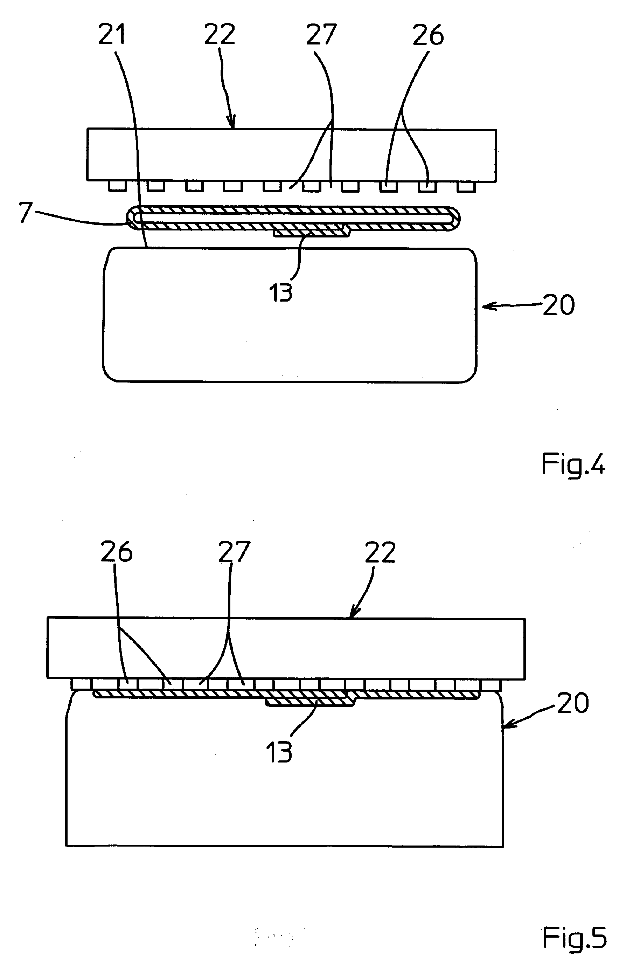

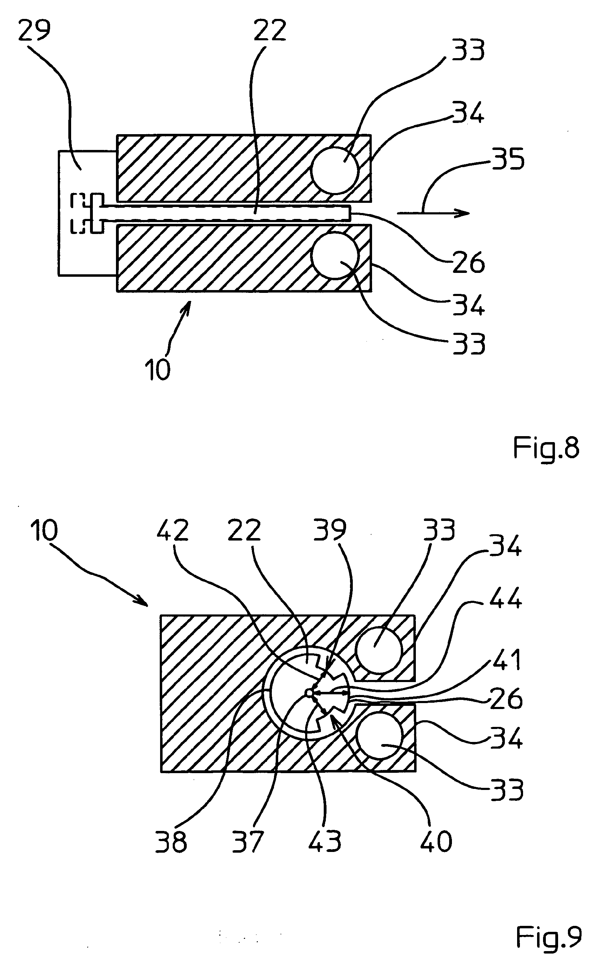

Die Schneide 21 des Stechmessers 20 ist gerade ausgebildet. Zwecks Erzeugung der Perforation 18 mit eben dieser geraden Schneide 21 weist die zweite Backe 10 einen die Auslenkung des Stechmessers 20 begrenzenden Amboss 22 auf. Am Amboss 22 ist eine Reihe von Erhebungen 26 vorgesehen (Figuren 2 bis 6). Jeweils eine Erhebung 26 stellt einen mechanischen Widerstand für die Schneide 21 dar. Zwischen jeweils zwei Erhebungen 26 ist eine Materialaussparung 27 vorgesehen. Eine Stelleinrichtung 29 ist dazu vorgesehen, den Amboss 22 zu versetzen, um die Schneide 21 wahlweise gegen die Erhebungen 26 zu setzen und damit eine Perforation 18 zu erzeugen, oder, bei nach hinten versetztem Amboss 22 (Figur 6), die Schneide 21 nicht gegen die Erhebungen 26 setzen zu können, und um somit die Folienbahn 2 mittels einer Abschnittslinie zu durchtrennen. Die Stelleinrichtung 29 ist dazu vorgesehen, den Amboss 22 in die zweite Backe 10 hinein (Figur 3) und in entgegengesetzte Richtung 30, 35 (Figur 3, Figur 8) dazu wieder herauszustellen. Zwei Heizpatronenbohrungen 33 (Figur 3) dienen zur Aufnahme von Heizpatronen, um die zum Verschweißen der Folienbahn 2 benötigte Wärme an die beiden Siegelflächen 34 der Backe 10 zu leiten.

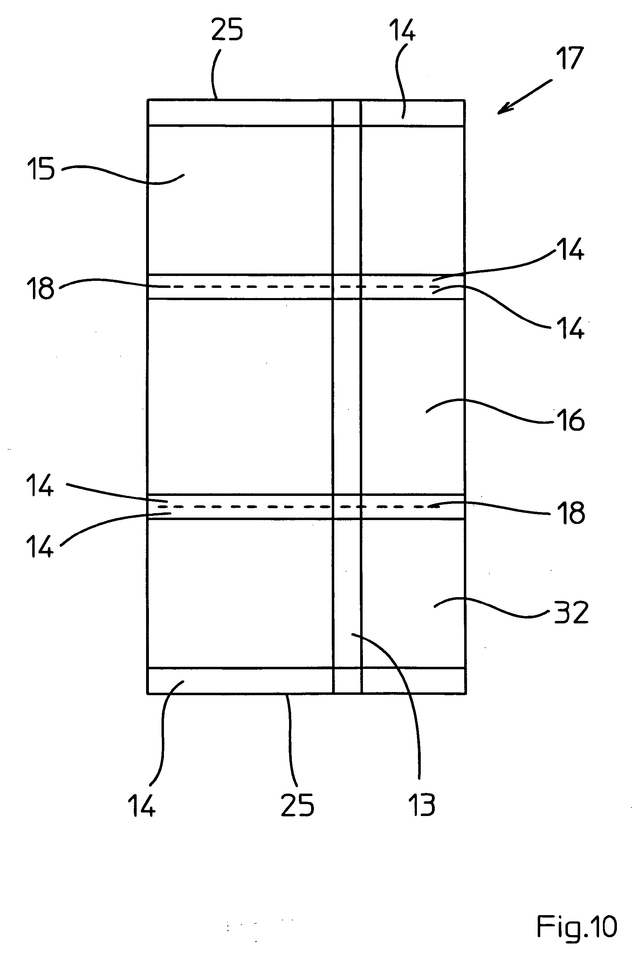

Erzeugt man nach jeder Abschnittslinie 25 zweimal jeweils eine Perforation 18, so entsteht eine Beutelkette 17 aus drei Beuteln 15, 16, 32 (Figur 10).

In einem weiteren Ausführungsbeispiel (Figur 9) ist der Amboss 22 um eine Achse 37 drehbar in der zweiten Backe 10 befestigt. Der Amboss hat eine zylinder artige Form, wobei sein Mantel 38 eine Anstoßfläche 41 mit den Erhebungen 26 zum Anstoßen der Schneide 21 des Stechmessers 20 aufweist. An die Anstoßfläche 41 grenzen zwei ein Freiräume 39, 40 an, so dass bei einer Drehung des Ambosses 22 wahlweise die Anstoßfläche 41 oder (je nach Drehrichtung) einer der Freiräume 39, 40 in die Bewegungsrichtung des Stechmessers 20 gesetzt werden kann. Der Freiraum 39 ist tiefer als der Freiraum 40 und wird für eine Bauart bedingte größere Stechmesserauslenkung benötigt. Die Freiräume 39, 40 und die Anstoßfläche 41 haben unterschiedliche Radialabstände 42, 43, 44.

## Patentansprüche

1. Vorrichtung (47) zum Verschweißen einer umgeformten Folienbahn (2), um eine aus mindestens zwei Beuteln (15, 16) bestehende Beutelkette (17) herzustellen, wobei zwischen jeweils zwei Beuteln (15, 16, 32) der Beutelkette (17) eine Perforation (18) vorgesehen wird, um diese Beutel (15, 16, 32) manuell voneinander trennen zu können, bestehend aus einer Folienbahn (2) und zwei gegeneinander beweglichen, die Folienbahn (2) zwischen sich einklemmenden Backen (10, 11), wobei die erste Backe (11) ein mit einer Schneide (21) versehenes Stechmesser (20) aufweist, um die Folienbahn (2) bei einer größeren Auslenkung des Stechmessers (20) vollständig durchtrennen zu können, und bei einer geringeren Auslenkung lediglich in die Folienbahn (2) einstechen zu können, um eine Perforation (18) zu erzeugen, **dadurch gekennzeichnet, dass** die Schneide (21) gerade ausgebildet ist, dass die zweite Backe (10) einen die Auslenkung des Stechmessers (20) begrenzenden Amboss (22) aufweist, dass am Amboss (22) eine Reihe von Erhebungen (26) vorgesehen ist, wobei jeweils eine Erhebung (26) einen mechanischen Widerstand für die Schneide (21) darstellt, dass zwischen jeweils zwei Erhebungen (26) eine Materialaussparung (27) vorgesehen ist, und dass eine Stelleinrichtung (29) dazu vorgesehen ist, den Amboss (22) zu versetzen, um die Schneide (21) wahlweise gegen die Erhebungen (26) zu setzen oder, bei versetztem Amboss (22), die Schneide (21) nicht gegen die Erhebungen (26) setzen zu können.

2. Vorrichtung nach Anspruch 1, **dadurch gekennzeichnet, dass** die Stelleinrichtung (29) dazu vorgesehen ist, den Amboss (22) in die zweite Backe (10) hinein und in entgegengesetzte Richtung (30, 35) dazu wieder herauszustellen.

3. Vorrichtung nach Anspruch 1, **dadurch gekennzeichnet, dass** der Amboss (22) um eine Achse (37) drehbar in der zweiten Backe (10) befestigt ist, dass der Amboss (22) eine zylinderartige Form hat, wobei sein Mantel (38) eine Anstoßfläche (41) mit den Erhebungen (26) zum Anstoßen der Schneide (21) des Stechmessers (20 aufweist, und dass an die Anstoßfläche (41) ein Freiraum (39, 40) angrenzt, so dass bei einer Drehung des Ambosses (22) wahlweise die Anstoßfläche (41) oder der Freiraum (39, 40) in die Bewegungsrichtung des Stechmessers (20) gesetzt werden kann.
